# EUROPÄISCHE PATENTSCHRIFT

(11) **EP 2 394 124 B1**
(45) Veröffentlichungstag und Bekanntmachung des Hinweises auf die Patenterteilung: **25.10.2017**
(21) Anmeldenummer: 09781291.1
(22) Anmeldetag: 30.07.2009
(51) Int. Cl.: F27B 3/28, F27D 19/00, F27D 21/00, C21C 5/52, C21C 5/30

(54) **VERFAHREN ZUR REGELUNG EINES KOHLENMONOXID-AUSSTOSSES EINES ELEKTROLICHTBOGENOFENS**
METHOD FOR CONTROLLING A CARBON MONOXIDE OUTPUT OF AN ELECTRIC ARC LIGHT OVEN
PROCÉDÉ POUR RÉGULER UN REJET DE MONOXYDE DE CARBONE D'UN FOUR À ARC ÉLECTRIQUE

(30) Priorität: 03.02.2009 DE 102009007575
(43) Veröffentlichungstag der Anmeldung: 14.12.2011
(73) Patentinhaber: Primetals Technologies Germany GmbH, 91052 Erlangen (DE)
(72) Erfinder: MATSCHULLAT, Thomas, 90542 Eckental (DE); RIEGER, Detlef, 85598 Baldham (DE)
(74) Vertreter: Metals@Linz
(86) Internationale Anmeldenummer: PCT/EP2009/059873
(87) Internationale Veröffentlichungsnummer: WO 2010/088972

(56) Entgegenhaltungen:
- DE-A1-102006 050 888
- MATSCHULLAT T ET AL: "Foaming Slag and Scrap Metal Behaviour in Electric Arc Furnace - A New and Very Precise Detection Method with Automatic Carbon Control" ARCHIVES OF METALLURGY AND MATERIALS, AKADEMIA GORNICZO-HUTNICZA IM. STANISLAWA STASZICA, POLAND, Bd. 53, Nr. 2, 1. März 2008 (2008-03-01), Seiten 399-403, XP002528409 ISSN: 1733-3490

## Beschreibung

Die Erfindung betrifft ein Verfahren und eine Vorrichtung zur Regelung eines Kohlenmonoxid-Ausstoßes eines Elektrolichtbogenofens während seines Betriebs, welcher ein Ofengefäß, eine Anordnung zur Bestimmung einer Höhe einer Schaumschlacke in mindestens drei Zonen des Ofengefäßes auf Basis einer Körperschallmessung, mindestens eine erste Einrichtung zur Regelung einer Sauerstoffzufuhr und mindestens eine zweite Einrichtung zur Regelung eines Kohlenstoffeintrags in das Ofengefäß aufweist.

Bei der Herstellung von Stahl in einem Elektrolichtbogenofen, wobei Schrott eingeschmolzen wird, entsteht in der Regel Schaumschlacke auf der gebildeten Metallschmelze. Dies resultiert aus einer Zugabe an Kohlenstoff in das Ofengefäß zur Reduktion der Schmelze und von Sauerstoff in das Ofengefäß zur Entkohlung der Schmelze. Der Eintrag von Kohlenstoff kann dabei durch eine Zugabe von Satzkohle, d.h. stückiger Kohle im Bereich von einigen Millimetern bis mehreren Zentimetern Durchmesser erfolgen, zusammen mit dem Schrott erfolgen oder durch zusätzliches Einblasen von Kohlenstoff in das Ofengefäß auf die Oberfläche der Metallschmelze und/oder Schlacke erfolgen. Ein Teil des erforderlichen Kohlenstoffs wird häufig auch durch den Schott selbst eingebracht. Der eingesetzte Schrott liegt schließlich erschmolzen im Ofengefäß vor und die gegebenenfalls vorhandene Satzkohle löst sich im Verlauf des Einschmelzprozesses in der Schmelze. Der in der Schmelze gelöst vorliegende Kohlenstoff steht als Reaktionspartner für in das Ofengefäß eingedüsten Sauerstoff zu Verfügung, wobei sich Kohlenmonoxid (CO) und Kohlendioxid (CO₂) ausbilden, die zur Bildung von Schaumschlacke auf der Oberfläche der Metallschmelze führen.

Da nach dem Aufschmelzen des Schrotts eine große Menge an Kohlenstoff gelöst in der Schmelze vorliegt, wird bei der Eindüsung des Sauerstoffs eine Menge an Schaumschlacke gebildet, die ein sinnvolles Niveau häufig übersteigt. Die sich einstellende Höhe der Schaumschlacke im Ofengefäß wird daher üblicherweise überwacht.
Die EP 0 637 634 A1 beschreibt ein Verfahren zur Herstellung einer Metallschmelze in einem Elektrolichtbogenofen, wobei die Höhe der Schaumschlacke über eine Pegelmessung bestimmt wird.
Eine weitere Anordnung zur Bestimmung der Höhe einer Schaumschlacke im Ofengefäß eines Elektrolichtbogenofens wird in der DE 10 2005 034 409 B3 beschrieben. Hier erfolgt eine Bestimmung der Höhe einer Schaumschlacke in mindestens drei Zonen des Ofengefäßes auf Basis einer Körperschallmessung.
Um die Höhe der Schaumschlacke auf Basis der bekannten Messsysteme zu regeln, wurden bereits Einrichtungen zur Regelung der Menge an zusätzlich eingeblasenem Kohlenstoff und eingedüstem Sauerstoff vorgesehen, welche bei einem zu übermäßigen Aufschäumen die Menge an zusätzlich eingeblasenem Kohlenstoff auf ein Minimum reduzieren und die Sauerstoffzugabemenge anpassen. Matschullat et al, in "Foaming Slag and Scrap Metal Behaviour in Electric Arc Furnace - A New and Very Precise Detection Method with Automatic Carbon Control"ARCHIVES OF METALLURGY AND MATERIALS, AKADEMIA GORNICZO-HUTNICZA IM. STANISLAWA STASZICA, POLAND, Bd. 53, Nr. 2, 1. März 2008 (2008-03-01), Seiten 399-403, beschreiben solche Entwicklungen. Es hat sich gezeigt, dass im Abgas des Elektrolichtbogenofens zu Beginn und während der Phase der Schaumschlackenbildung über einen gewissen Zeitraum eine übermäßig große Menge an Kohlenmonoxid enthalten ist, die sich in einem Kohlenmonoxid-Peak oder Kohlenmonoxid-Buckel äußert und die nicht zufriedenstellend nachverbrannt werden kann. Das eine Abgasnachverbrennungsanlage wieder verlassende Kohlenmonoxid gelangt über den Kamin in die Umwelt.
Der Gehalt an Kohlenmonoxid und weiterhin Kohlendioxid im Abgas wurde in der Vergangenheit teilweise basierend auf einer Messung in einem Abgaskanal nach dem Elektrolichtbogenofen und/oder nach einer Abgasnachverbrennunganlage mittels Gassensoren ermittelt. Aufgrund der am Messort vorherrschenden hohen Temperatur des Abgases und seines erheblichen Staubanteils sind derartige Messungen aber mit Fehlern behaftet und die Lebensdauer der dazu verwendeten Messeinrichtungen eingeschränkt. Weiterhin wird aufgrund der Messung im Abgaskanal die Entwicklung des Kohlenmonoxids im Ofengefäß erst mit einer gewissen Zeitverzögerung erfasst, was einen verspäteten Regeleingriff zur Folge hat. Dies führt dazu, dass kurzfristig eine übermäßig große Menge an Kohlenmonoxid im Abgas enthalten ist, die nicht zufriedenstellend nachverbrannt werden kann. Das die Abgasnachverbrennungsanlage wieder verlassende Kohlenmonoxid gelangt wiederum über den Kamin in die Umwelt.
Es ist daher Aufgabe der Erfindung, ein Verfahren und eine Vorrichtung bereitzustellen, mit welchem/welcher eine Vergleichmäßigung eines Kohlenmonoxidgehalts im Abgas eines Elektrolichtbogenofens ermöglicht wird.
Die Aufgabe wird für das Verfahren zur Regelung eines Kohlenmonoxid-Ausstoßes eines Elektrolichtbogenofens, nach Anspruch 1 welcher ein Ofengefäß, eine Anordnung zur Bestimmung einer Höhe einer Schaumschlacke in mindestens drei Zonen des Ofengefäßes auf Basis einer Körperschallmessung, mindestens eine erste Einrichtung zur Regelung einer Sauerstoffzufuhr und mindestens eine zweite Einrichtung zur Regelung eines Kohlenstoffeintrags in das Ofengefäß aufweist, gelöst, indem die Höhe der Schaumschlacke in jeder der mindestens drei Zonen bestimmt und einem Kohlenmonoxidgehalt im Abgas des Elektrolichtbogenofens zugeordnet wird, und indem der Kohlenstoffeintrag und/oder die Sauerstoffzufuhr in mindestens einer der zumindest drei Zonen derart geregelt werden, dass die Höhe der Schaumschlacke unterhalb eines Maximalwerts gehalten wird.
Die Aufgabe wird für die Vorrichtung zur Regelung eines Kohlenmonoxid-Ausstoßes eines Elektrolichtbogenofens gelöst, welcher ein Ofengefäß und eine Anordnung zur Bestimmung einer Höhe einer Schaumschlacke in mindestens drei Zonen des Ofengefäßes auf Basis einer Körperschallmessung umfasst, wobei die Vorrichtung mindestens eine erste Einrichtung zur Regelung einer Sauerstoffzufuhr in das Ofengefäß, mindestens eine zweite Einrichtung zur Regelung eines Kohlenstoffeintrags in das Ofengefäß und mindestens eine Recheneinheit zur Erfassung von Messwerten zur Höhe der Schaumschlacke in jeder der mindestens drei Zonen umfasst, wobei die mindestens eine Recheneinheit weiterhin dazu eingerichtet ist, die Messwerte einem Kohlenmonoxidgehalt im Abgas des Elektrolichtbogenofens zuzuordnen, die Messwerte mit einem Maximalwert für die Höhe der Schaumschlacke zu vergleichen, und bei einer Überschreitung des Maximalwerts mindestens ein Regelsignal für zumindest die mindestens eine erste Einrichtung und/oder die mindestens eine zweite Einrichtung auszugeben.

Das erfindungsgemäße Verfahren ermöglicht eine Vergleichmäßigung eines Kohlenmonoxidgehaltes im Abgas eines Elektrolichtbogenofens. Aufgrund der Tatsache, dass die Höhe der Schaumschlacke im Elektrolichtbogenofen ein Maß für die Menge an gebildetem Kohlenmonoxid und Kohlendioxid darstellt, eröffnet sich die Möglichkeit, die Messung der Höhe der Schaumschlacke unmittelbar zur Regelung des Kohlenmonoxid-Ausstoßes des Elektrolichtbogenofen zu nutzen. Nachdem die Bestimmung einer Höhe der Schaumschlacke in mindestens drei Zonen des Ofengefäßes auf Basis einer Körperschallmessung besonders schnell und genau durchführbar ist, kann die Regelung der mindestens einen ersten und/oder der mindestens einen zweiten Einrichtung besonders schnell und ohne merkliche Zeitverzögerung erfolgen. Aufgrund der erreichten Vergleichmäßigung des Kohlenmonoxidgehaltes im Abgas kann eine vollständige oder nahezu vollständige Nachverbrennung des im Abgas enthaltenen Kohlenmonoxids in einer Abgasnachverbrennungsanlage, welche einem Elektrolichtbogenofen üblicherweise nachgeschaltet ist, erzielt werden. Der Anteil an Kohlenmonoxid, der über den Kamin in die Umwelt entweicht, wird auf Null oder nahezu Null reduziert oder zumindest stark verringert. Die Belastung der Umwelt mit Schadstoffen wird signifikant gesenkt.

Weiterhin kann die Menge an einzutragendem Kohlenstoff und/oder zuzuführendem Sauerstoff vermindert und Kosten eingespart werden.

Hinsichtlich einer Bestimmung der Höhe der Schaumschlacke in den mindestens drei Zonen des Ofengefäßes auf Basis einer Körperschallmessung wird auf die DE 10 2005 034 409 B3 verwiesen, in welcher die hier eingesetzte Messmethode im Detail beschrieben ist.

Der Maximalwert kann dabei über die Zeit fest auf einen Wert eingestellt sein, mehrere vorbestimmte Stufen durchlaufen oder dynamisch an die aktuellen Gegebenheiten angepasst werden.

Vorteilhafte Ausgestaltungen des erfindungsgemäßen Verfahrens und der erfindungsgemäßen Vorrichtung sind nachfolgend angegeben.

Die Höhe der Schaumschlacke wird weiterhin bevorzugt oberhalb eines Minimalwerts gehalten. Eine Mindestmenge an Schaumschlacke gewährleistet einen optimalen Energieeintrag in die Schmelze und eine Verringerung der Wärmeabstrahlung von der Oberfläche der Schmelze. Bisher wurde daher bereits bei einem Erreichen eines Minimalwerts für die Höhe der Schaumschlacke die mindestens eine zweite Einrichtung zur Regelung eines Kohlenstoffeintrags in das Ofengefäß derart geregelt, dass der Eintrag an Kohlenstoff minimiert wird. Eine Einhaltung des Minimalwerts sowie des Maximalwerts für die Höhe der Schaumschlacke führt zu einer weiteren Vergleichmäßigung des Kohlenmonoxidgehaltes im Abgas und zu einer effektiveren Nutzung einer gegebenenfalls vorhandenen Abgasnachverbrennungsanlage.

Die mindestens eine Recheneinheit der Vorrichtung ist insbesondere dazu eingerichtet, die Messwerte betreffend die Höhe der Schaumschlacke mit dem Minimalwert für die Höhe der Schaumschlacke zu vergleichen und bei einer Unterschreitung des Minimalwerts mindestens ein Regelsignal für die mindestens eine erste Einrichtung und/oder die mindestens eine zweite Einrichtung auszugeben.

Jeder der zumindest drei Zonen des Elektrolichtbogenofens wird/ist bevorzugt mindestens eine erste Einrichtung zugeordnet und die Sauerstoffzufuhr für jede der zumindest drei Zonen wird/ist separat geregelt. So kann einem lokalen übermäßigen Aufschäumen der Schaumschlacke gezielt durch Verminderung der Sauerstoffzugabe in diesem Bereich entgegen gesteuert werden. Bei einer zu geringen Schaumschlackenhöhe wird dagegen die Sauerstoffzugabe erhöht und dadurch die Schaumbildung angeregt.

Als zum Eintrag von Sauerstoff in das Ofengefäß geeignete Materialien haben sich dabei reiner Sauerstoff, Luft, Wasserdampf oder Kombinationen daraus bewährt. Auch eine Zugabe von Eisenoxid, bevorzugt in Form von Eisenerz, als Sauerstofflieferant kann vorgesehen sein.

Weiterhin wird/ist jeder der zumindest drei Zonen mindestens eine zweite Einrichtung zugeordnet und der Kohlenstoffeintrag wird/ist für jede der zumindest drei Zonen separat geregelt. So kann einem lokalen übermäßigen Aufschäumen der Schaumschlacke gezielt durch eine Verminderung des Kohlenstoffeintrags in diesem Bereich entgegen gesteuert werden. Bei einer zu geringen Schaumschlackenhöhe kann dagegen der Kohlenstoffeintrag erhöht und dadurch die Schaumbildung angeregt werden. Der Kohlenstoffeintrag erfolgt dabei vorzugsweise gepulst.

Als zum Eintrag von Kohlenstoff mittels Einblasens in das Ofengefäß geeignete Materialien haben sich dabei verschiedene Kohlen, Koks, Holz, Eisenkarbid, direktreduziertes Eisen, heißbrikettiertes Eisen, Erz, Filterstaub, Zunder, getrockneter und zerkleinerter Schlamm, ein Schlackenbildner wie Kalk, Kalkstein, Dolomit, Flussspat, und dergleichen bewährt, wobei der Eintrag in zerkleinerter Form bzw. als Pulver erfolgt.

Besonders bevorzugt ist hierbei ein Einsatz von jeweils mindestens einer ersten Einrichtung und mindestens einer zweiten Einrichtung für jede der festgelegten Zonen des Ofengefäßes, um die Schaumschlackenbildung möglichst schnell und dynamisch beeinflussen zu können.

Bevorzugt erfolgt mittels Extrapolation eine Vorhersage eines Verlaufs der Höhe der Schaumschlacke in jeder der zumindest drei Zonen und/oder gemittelt über die zumindest drei Zonen. Aus dem zeitlichen Verlauf der Schaumschlackenhöhe einer Zone kann einem übermäßigen oder zu geringem Schäumen frühzeitig entgegengewirkt und eine Vergleichmäßigung des Kohlenmonoxidgehalts im Abgas des Elektrolichtbogenofens bei gleichzeitig optimalem Energieeintrag zuverlässig gewährleistet werden. Die Verzugszeit zwischen der Detektion eines zu niedrigen oder zu hohen Schaumschlackestands im Ofengefäß und einem Regeleingriff wird wesentlich verringert und eine prozessnahe Beeinflussung erreicht.

Die mindestens eine Recheneinheit der Vorrichtung ist bevorzugt eingerichtet, anhand der Messwerte bezüglich der Höhe der Schaumschlacke die Extrapolation zur Vorhersage eines Verlaufs der Höhe der Schaumschlacke in jeder der zumindest drei Zonen und/oder gemittelt über die zumindest drei Zonen durchzuführen.

Alternativ oder in Kombination wird eine Vorhersage eines Verlaufs der Höhe der Schaumschlacke in jeder der zumindest drei Zonen und/oder gemittelt über die zumindest drei Zonen und eine Korrelation von Messwerten zur Höhe der Schaumschlacke mit Kohlenmonoxidgehalten anhand von gemessenen Kohlendioxidgehalten im Abgas durchgeführt.

Alternativ oder in Kombination dazu kann eine Vorhersage eines Verlaufs der Höhe der Schaumschlacke in jeder der zumindest drei Zonen und/oder gemittelt über die zumindest drei Zonen und eine Korrelation von Messwerten zur Höhe der Schaumschlacke mit Kohlenmonoxidgehalten anhand eines Reaktionsmodells durchgeführt werden, das auf der mindestens einer Recheneinheit hinterlegt wird/ist. Das Reaktionsmodell basiert dabei bevorzugt auf theoretischen Berechnungen zur Abgasbildung, welche vorzugsweise in Kombination mit Erfahrungswerten zur Abgasbildung für einen Elektrolichtofenbogen und/oder das zu erschmelzende Material und/oder das verwendete Schmelzprogramm hinterlegt sind. Bei der Erstellung eines Reaktionsmodells sind bevorzugt die Zusammensetzung der Schmelze, die Temperatur der Schmelze, die erzeugte Abgasmenge, der Ort und die Menge der Schaumschlackenbildung usw. zu berücksichtigen. Insbesondere ist es von Vorteil, wenn das Reaktionsmodell stetig im Betrieb des Elektrolichtbogenofens anhand von Messwerten und Anlagenparametern optimierbar ist, welche von der mindestens einen Recheneinheit bevorzugt automatisch erfasst, gegebenenfalls vom Bedienpersonal noch manuell über eine Eingabeeinheit ergänzt werden können.

Bevorzugt wird mindestens ein Fuzzy-Regler, insbesondere ein Neurofuzzy-Regler, zur Regelung der mindestens einen ersten Einrichtung und/oder der mindestens einen zweiten Einrichtung eingesetzt. Fuzzy-Regler sind Systeme, die zur Klasse der Kennfeld-Regler gehören, die der Theorie der Fuzzy-Logik entsprechen. In jedem Regelungsschritt werden drei Teilschritte durchgeführt: eine Fuzzyfizierung, eine Inferenz und schließlich eine Defuzzyfizierung. Die einzelnen Ein- und Ausgänge werden als linguistische Variablen bezeichnet, zu denen jeweils Fuzzy-Mengen gehören.

Ein solcher Fuzzy-Regler kann dabei beispielsweise auf ein in der Recheneinheit hinterlegtes, bereits oben genanntes Reaktionsmodell zurückgreifen.

Eine dynamische Regelung kann in den unterschiedlichen Phasen eines Einschmelzvorgangs, insbesondere in der Phase der Bildung der Schaumschlacke, auf Basis unterschiedlicher Minimal- und/oder Maximalwerte für die Höhe der Schaumschlacke erfolgen. Die Schaumschlackenphase kennzeichnet einen Zeitraum nach dem Aufschmelzen aller metallischen Bestandteile im Ofenraum, in welchem eine Reduzierung und/oder Entkohlung der Schmelze durchgeführt wird.

In einer bevorzugten Ausgestaltung des Verfahrens wird ein aktueller Kohlenmonoxidgehalt im Abgas gemessen und mit einem Sollkohlenmonoxidgehalt im Abgas verglichen. Ein solcher Sollkohlenmonoxidgehalt kennzeichnet dabei insbesondere die von einer, dem Elektrolichtbogenofen nachgeschalteten Abgasnachverbrennungsanlage optimal nachverbrennbare Menge an Kohlenmonoxid im Abgas. Damit dieser Sollkohlendioxidgehalt möglichst durchgehend erreicht wird, hat es sich als günstig erwiesen, den Maximalwert dynamisch entsprechend zu verändern bzw. anzupassen. Dies ermöglicht eine optimale Ausnutzung der Kapazität einer Abgasnachverbrennungsanlage.

Die mindestens eine Recheneinheit der Vorrichtung ist insbesondere dazu eingerichtet, im Abgas aktuell gemessene Kohlenmonoxidgehalte mit einem auf der mindestens einen Recheneinheit hinterlegten Sollkohlenmonoxidgehalt zu vergleichen und zur Erreichung des Sollkohlendioxidgehalts den Maximalwert dynamisch zu verändern. Dadurch kann ein vorab eingestellter Maximalwert korrigiert und dynamisch an aktuelle oder sich ändernde Anlagengegebenheiten angepasst werden.

Der Maximalwert kann mit einem zulässigen Grenzwert für Kohlenmonoxid, der auf einer gesetzlichen Regelung beruht, korreliert sein. Dabei wird der Maximalwert insbesondere so gewählt, dass ein mittels einer dem Elektrolichtbogenofen nachgeschalteten Abgasnachverbrennungsanlage nachverbranntes Abgas maximal eine Restmenge an Kohlenmonoxid pro Zeiteinheit an die Umwelt abgibt, die unterhalb eines zulässigen Grenzwerts liegt.

In einer weiteren bevorzugten Ausgestaltung des Verfahrens wird nach Zuordnung der Höhe der Schaumschlacke in jeder der mindestens drei Zonen zu einem Kohlenmonoxidgehalt im Abgas des Elektrolichtbogenofens ein Betrieb einer dem Elektrolichtbogenofen nachgeschalteten Abgasverbrennungsanlage anhand des zugeordneten Kohlenmonoxidgehalts geregelt. Dabei kann die in die Abgasverbrennungsanlage eingedüste Sauerstoffmenge, beispielsweise über eine Regelung einer Fördermenge von Frischluftventilatoren und/oder von Gasventilen, derart beeinflusst werden, dass bei einem höheren Kohlenmonoxidgehalt im Abgas nach dem Elektrolichtbogenofen eine entsprechend größere Sauerstoffmenge zu dessen Nachverbrennung bereitgestellt wird.

Die mindestens eine Recheneinheit der Vorrichtung ist bevorzugt dazu eingerichtet, nach Zuordnung der Höhe der Schaumschlacke in jeder der mindestens drei Zonen zu einem Kohlenmonoxidgehalt im Abgas des Elektrolichtbogenofens, einen Betrieb einer dem Elektrolichtbogenofen nachgeschalteten Abgasnachverbrennungsanlage anhand des zugeordneten Kohlenmonoxidgehalts zu regeln.

Die Figuren 1 bis 5 sollen die Erfindung beispielhaft erläutern. So zeigt:
- Figur 1: eine Übersicht über einen Verfahrensablauf in der Endphase eines Einschmelzvorgangs in einem Elektrolichtbogenofen;
- Figur 2: einen Vergleich zwischen einem Verfahrensablauf in der Endphase eines Einschmelzvorgangs in einem Elektrolichtbogenofen gemäß Figur 1 und einem erfindungsgemäßen Verfahrensablauf in der Endphase;
- Figur 3: schematisch einen Elektrolichtbogenofen mit einer erfindungsgemäßen Vorrichtung;
- Figur 4: schematisch einen Schnitt durch das Ofengefäß des Elektrolichtbogenofens gemäß Figur 3; und
- Figur 5: eine Gegenüberstellung eines Kohlenmonoxidgehalts im Abgas CO_{abg} und einer Höhe der Schaumschlacke HS mit und ohne erfindungsgemäßer Regelung.

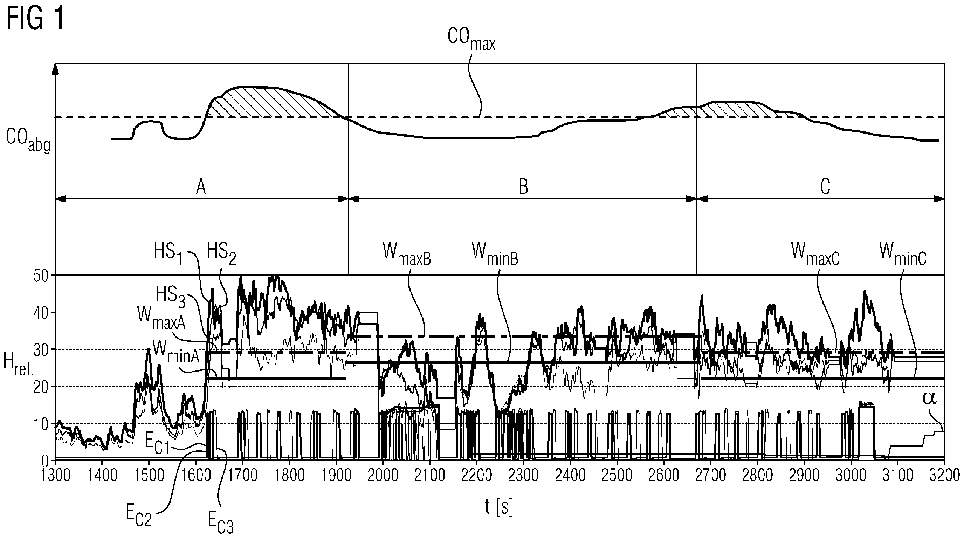

Figur 1 zeigt eine Übersicht über einen Verfahrensablauf in der Endphase eines Einschmelzvorgangs in einem Elektrolichtbogenofen. Über der X-Achse, welche die Zeit t in Sekunden seit Beginn des Einschmelzvorganges angibt, sind auf der Y-Achse mit Hᵣₑₗ. ein Kippwinkel α eines Ofengefäßes eines Elektrolichtbogenofens, eine Höhe der Schaumschlacke HS₁, HS₂, HS₃ für jeweils eine von drei Zonen des Ofengefäßes sowie eine Kohlenstoffeintragsmenge E_{C1}, E_{C2}, E_{C3} für jede der drei Zonen des Ofengefäßes aufgetragen. Dabei sind das Ende der Schrotteinschmelzphase und der Beginn der Schaumschlackenphase mit A, der mittlere Bereich der Schaumschlackenphase mit B und die Endphase der Schaumschlackenphase kurz vor dem Vergießen der Schmelze mit C bezeichnet.

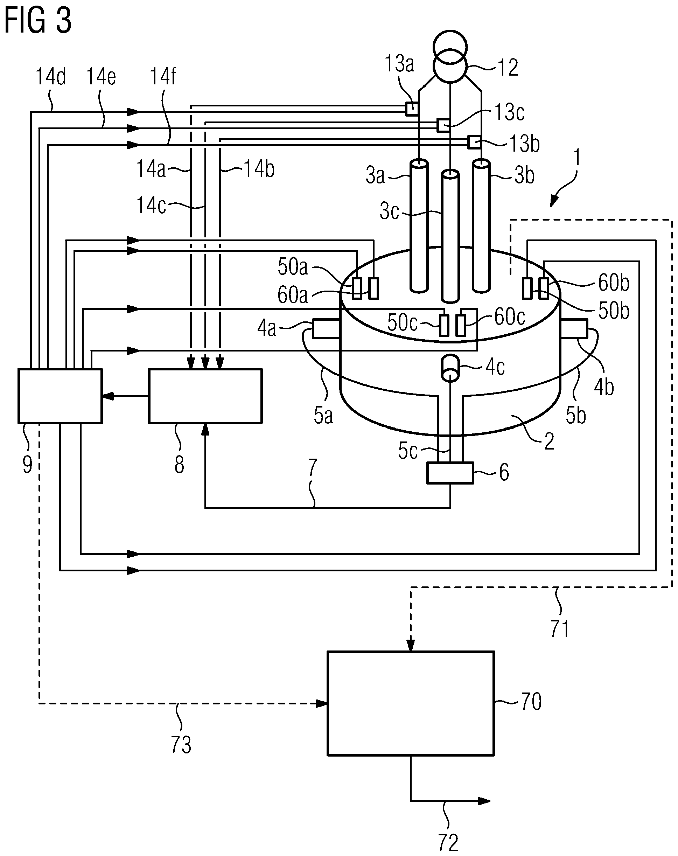

Die Bestimmung der Höhe der Schaumschlacke HS₁, HS₂, HS₃ in den drei Zonen des Ofengefäßes 1a am Elektrolichtbogenofen 1 erfolgt mittels einer Körperschallmessung. Pro Zone des Ofengefäßes 1a ist eine erste Einrichtung 50a, 50b, 50c zur Regelung der Sauerstoffzufuhr und eine zweite Einrichtung 60a, 60b, 60c zur Regelung eines Kohlenstoffeintrags E_{C1}, E_{C2}, E_{C3} in das Ofengefäß 1a vorhanden (vergleiche hierzu Figur 3).

In den Phasen A bis C sind jeweils ein Maximalwert W_{maxA}, W_{ma-xB}, W_{maxC} sowie ein Minimalwert W_{minA}, W_{minB}, W_{minC} für die Höhe der Schaumschlacke im Ofengefäß aufgetragen. In den Phasen A bis C erfolgte bisher eine unzureichende Regelung des Kohlenmonoxid-Ausstoßes CO_{abg} des Elektrolichtbogenofens 1. Die Höhe der Schaumschlacke HS₁, HS₂, HS₃ übersteigt insbesondere in Phase A den Minimalwert W_{minA} und weiterhin den Maximalwert W_{maxA} bei weitem und führt zu einer Überschreitung eines Werts COₘₐₓ für einen gewünschten Kohlenmonoxidgehalt oder einen Sollkohlenmonoxidgehalts im Abgas (siehe schraffierte Flächen im CO_{abg}-Verlauf). Aber auch in den Phasen B und C kann es zu einer Überschreitung eines Werts COₘₐₓ für einen gewünschten Kohlenmonoxidgehalt oder einen Sollkohlenmonoxidgehalts im Abgas kommen. Eine dem Elektrolichtbogenofen 1 nachgeschaltete Abgasnachverbrennungsanlage 70 kann die ankommende große Kohlenmonoxidmenge nicht ausreichend nachverbrennen, so dass eine unerwünschte Menge an Kohlenmonoxid im Abgas verbleibt und in die Umwelt gelangt.

Der Maximalwert W_{maxA}, W_{maxB}, W_{maxC} kann dabei mit einem zulässigen Grenzwert für Kohlenmonoxid im nachverbrannten Abgas, das über den Kamin an die Umwelt abgegeben wird, korreliert sein.

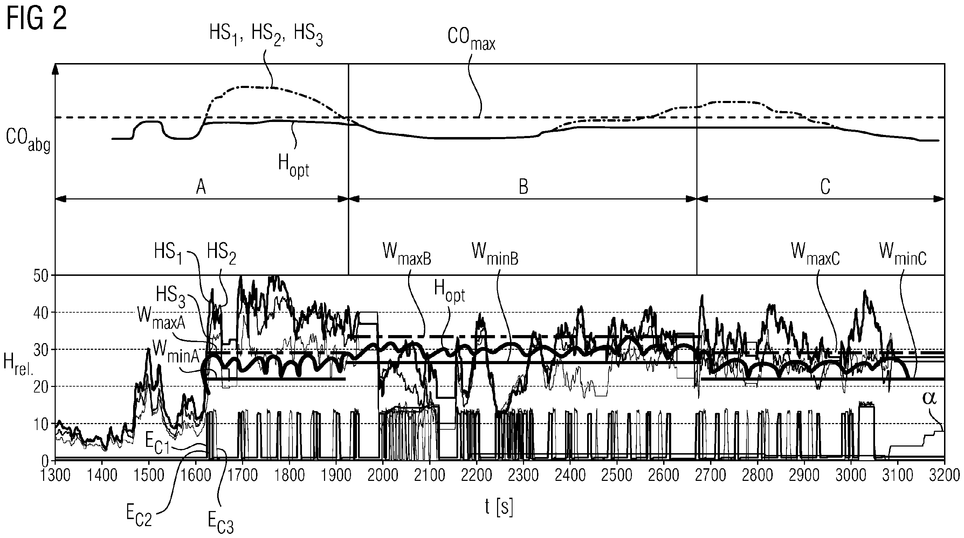

Figur 2 zeigt nun einen Vergleich zwischen einem Verfahrensablauf gemäß Figur 1 und einem Verfahrensablauf gemäß der Erfindung in der Endphase eines Einschmelzprozesses. In den drei Phasen A, B, C sind erneut die Kurven für die ermittelte Höhe der Schaumschlacke HS₁, HS₂, HS₃ gemäß Figur 1 dargestellt und der zugehörige Verlauf des Kohlenmonoxidgehalts im Abgas CO_{abg} dargestellt (siehe strichpunktierte Linie im CO_{abg}-Verlauf).

Weiterhin ist nun eine Kurve dargestellt, die die Höhe der Schaumschlacke Hₒₚₜ. im Mittel bei einer Regelung der Sauerstoffzufuhr und des Kohlenstoffeintrags E_{C1}, E_{C2}, E_{C3} gemäß der Erfindung zeigt. Die Maximalwerte W_{maxA}, W_{maxB}, W_{maxC} in den Phasen A, B, C für die Höhe der Schaumschlacke werden dabei für alle drei Zonen des Ofengefäßes 1a nicht mehr überschritten. Dadurch ergibt sich bei einem Verlauf der Höhe der Schaumschlacke gemäß der Kurve H_{opt.} ein Verlauf für den Kohlenmonoxidgehalt im Abgas CO_{abg} (siehe fette Linie im CO_{abg}-Verlauf), der durchwegs unterhalb des Werts COₘₐₓ liegt. In Phase A und dem Bereich des Übergangs zwischen den Phasen B und C wird der Kohlenmonoxid-Ausstoß des Elektrolichtbogenofens gesenkt, der Wert COₘₐₓ nicht mehr überschritten. Der CO-Ausstoß des Elektrolichtbogenofens ist nun auf einem gleichmäßigen Niveau und kann von der dem Elektrolichtbogenofen üblicherweise nachgeschalteten Abgasnachverbrennungsanlage gleichmäßig verbrannt werden.

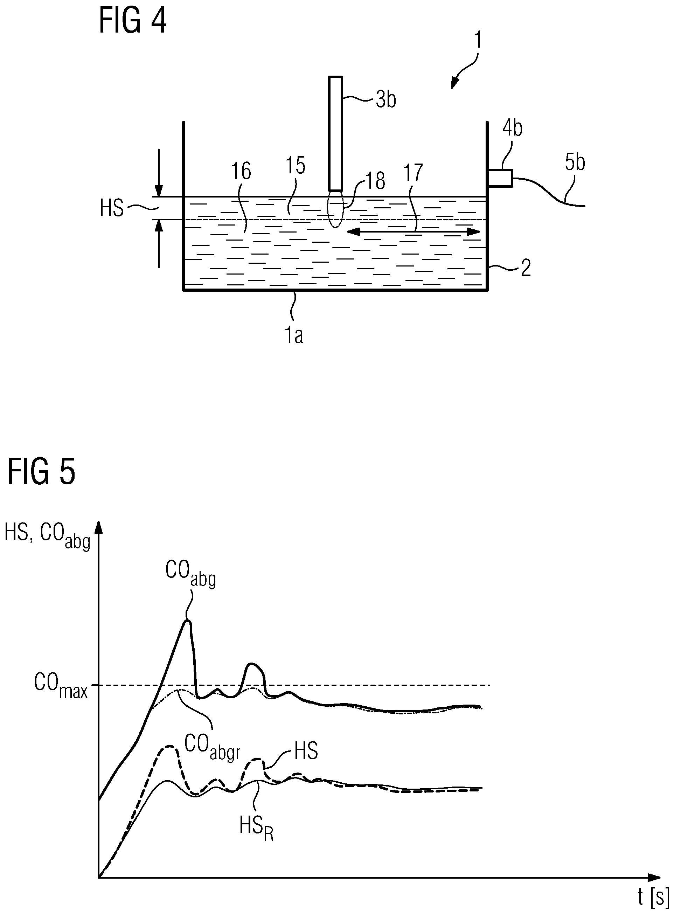

Fig. 3 zeigt einen Elektrolichtbogenofen 1 mit einem Ofengefäß 1a, in das mehrere Elektroden 3a, 3b, 3c, die über Stromzuführungen mit einer Stromversorgungseinrichtung 12 gekoppelt sind, geführt sind. Die Stromversorgungseinrichtung 12 weist vorzugsweise einen Ofentransformator auf. Mit Hilfe von mindestens einer der drei Elektroden 3a, 3b, 3c werden im Elektrolichtbogenofen 1 Beschickungsmaterialien, wie beispielsweise Schrott und weitere Zuschlagsstoffe, aufgeschmolzen. Bei der Erzeugung von Stahl im Elektrolichtbogenofen 1 wird Schlacke bzw. Schaumschlacke 15 (siehe Fig. 4) gebildet, wodurch der Energieeintrag mittels eines Lichtbogens 18 (siehe Fig. 4), der sich an der mindestens einen Elektrode 3a, 3b, 3c ausbildet, in die Schmelze verbessert wird.

Im gezeigten Ausführungsbeispiel gemäß Figur 3 sind an den Stromzuführungen der Elektroden 3a, 3b, 3c Sensor- und Regeleinrichtungen 13a, 13b, 13c vorgesehen, mit Hilfe derer Strom und/oder Spannung bzw. die den Elektroden 3a, 3b, 3c zugeführte Energie gemessen und geregelt werden können. Die Sensor- und Regeleinrichtungen 13a, 13b, 13c erfassen die Strom- und/oder Spannungssignale vorzugsweise zeitaufgelöst. Die Sensor- und Regeleinrichtungen 13a, 13b, 13c sind mit einer Recheneinheit 8, beispielsweise über als Kabel ausgebildete Signalleitungen 14a, 14b, 14c gekoppelt. Weitere Signalleitungen 14d, 14e, 14f dienen der Verbindung der Sensor- und Regeleinrichtungen 13a, 13b, 13c mit einer Regeleinrichtung 9, welche von der Recheneinheit 8 die Regelvorgaben erhält.

An der Wand 2 des Ofengefäßes 1a, d.h. an der äußeren Begrenzung des Ofengefäßes 1a, sind Körperschallsensoren 4a, 4b, 4c zur Messung von Schwingungen angeordnet. Die Körperschallsensoren 4a, 4b, 4c können mittelbar und/oder unmittelbar mit dem Ofengefäß 1a bzw. mit der Wand 2 des Ofengefäßes 1a verbunden sein. Vorzugsweise sind die Körperschallsensoren 4a, 4b, 4c an den, den Elektroden 3a, 3b, 3c gegenüberliegenden Seiten der Wand 2 des Elektrolichtbogenofens 1 angeordnet. Die Körperschallsensoren 4a, 4b, 4c sind hier vorzugsweise als Beschleunigungssensoren ausgebildet und oberhalb der Schaumschlacke 15 (siehe Figur 4) positioniert. Die Körperschallsensoren 4a, 4b, 4c sind ebenfalls mit der Recheneinheit 8 verbunden.

Die Messwerte bzw. Signale, die von den Körperschallsensoren 4a, 4b, 4c an die Recheneinheit 8 übermittelt werden, werden über geschützte Leitungen 5a, 5b, 5c in eine optische Einrichtung 6 geführt und von dieser zumindest teilweise in Richtung der Recheneinheit 8 über einen Lichtwellenleiter 7 geleitet. Die Signalleitungen 5a, 5b, 5c sind vorzugsweise vor Hitze, elektromagnetischen Feldern, mechanischer Belastung und/oder anderen Belastungen geschützt geführt.

Die optische Einrichtung 6 dient zur Verstärkung und/oder Umsetzung von Signalen der Körperschallsensoren 4a, 4b, 4c und ist vorzugsweise verhältnismäßig nahe am Elektrolichtbogenofen 1 angeordnet. In der optischen Einrichtung 6 werden die Messwerte bzw. Signale der Körperschallsensoren 4a, 4b, 4c in optische Signale umgewandelt und über den Lichtwellenleiter 7 störungsfrei über vergleichsweise längere Distanzen, z.B. 50 bis 200 m, zur Recheneinheit 8 übertragen.

Pro Zone des Ofengefäßes 1a ist hier eine erste Einrichtung 50a, 50b, 50c zur Regelung der Sauerstoffzufuhr und eine zweite Einrichtung 601, 60b, 60c zur Regelung eines Kohlenstoffeintrags E_{C1}, E_{C2}, E_{C3} (vergleiche Figuren 1 und 2) in das Ofengefäß 1a vorhanden, die mittels der Recheneinheit 8 und der Regeleinrichtung 9 erfindungsgemäß derart kontrolliert werden, dass ein Maximalwert W_{maxA}, W_{maxB}, W_{maxC} in den Phasen A, B, C (vergleiche Figur 2) für die Höhe der Schaumschlacke 15 für alle drei Zonen des Ofengefäßes 1a oder im Mittel der drei Zonen nicht überschritten wird. Weiterhin erfolgt eine Kontrolle derart, dass ein Minimalwert W_{minA}, W_{minB}, W_{minC} in den Phasen A, B, C (vergleiche Figur 2) für die Höhe der Schaumschlacke 15 für alle drei Zonen des Ofengefäßes 1a oder im Mittel über die drei Zonen nicht unterschritten wird, damit ein optimaler Energieeintrag in den Elektrolichtbogenofen 1 gewährleistet wird.

In der Recheneinheit 8 werden dazu die Messwerte bzw. Signale der Körperschallsensoren 4a, 4b, 4c und der Sensor- und Regeleinrichtungen 13a, 13b, 13c erfasst und ausgewertet, um die Höhe der Schaumschlacke 15 (siehe Fig. 4) im Ofengefäß 1a zu ermitteln. Die von den Körperschallsensoren 4a, 4b, 4c ermittelten Messwerte bzw. Signale sind mit der Höhe der Schaumschlacke 15 korreliert, wobei eine zeitliche Auflösung im Bereich von ca. 1 bis 2 Sekunden möglich ist. In der Recheneinheit 8 werden die Messwerte bzw. Signale, die die Höhe der Schaumschlacke 15 im Ofengefäß 1a pro Zone angeben, einem zugehörigen Kohlenmonoxidgehalt im Abgas des Elektrolichtbogenofens 1 zugeordnet. Der zugehörige Kohlenmonoxidgehalt wird in der Recheneinheit 8 mit einem Wert COₘₐₓ für Kohlenmonoxid im Abgas verglichen, der einer gewünschten Kohlenmonoxidmenge oder einer Sollkohlenmonoxidmenge entspricht, und der Kohlenstoffeintrag und/oder die Sauerstoffzufuhr im Bedarfsfall entsprechend korrigiert. Gegebenenfalls kann auch ein ergänzender Eingriff über die Änderung der Temperatur und/oder Zusammensetzung der Schmelze erfolgen.

Mittels der ersten Einrichtungen 50a, 50b, 50c und/oder der zweiten Einrichtungen 60a, 60b, 60c wird also in Abhängigkeit von dem zugeordneten Kohlenmonoxidgehalt insbesondere der Kohlenstoffeintrag und/oder die Sauerstoffzugabe in einer oder mehreren der Zonen des Ofengefäßes 1a derart geregelt, dass die Höhe der Schaumschlacke im Mittel oder in der jeweiligen Zone unterhalb des Maximalwerts W_{maxA}, W_{maxB}, W_{maxC} gehalten wird sowie den Minimalwert W_{minA}, W_{minB}, W_{minC} übersteigt. Die Recheneinheit 8 gibt mindestens ein Regelsignal bzw. eine Regelvorgabe, basierend auf der aktuell berechneten und/oder vorausberechneten Höhe der Schaumschlacke pro Zone im Ofengefäß 1a oder über die Zonen gemittelt an die Regeleinrichtung 9 weiter.

Die Regeleinrichtung 9 regelt nach Vorgabe der Recheneinheit 8, gegebenenfalls weiterhin auf Basis eigener Berechnungen, neben dem Kohlenstoffeintrag und/oder der Sauerstoffzufuhr weiterhin gegebenenfalls eine Zufuhr von weiteren Stoffen in das Ofengefäß 1a sowie einen Energieeintrag über die Elektroden 3a, 3b, 3c. Die Regeleinrichtung 9 umfasst bevorzugt einen Fuzzy-Regler.

Dem Elektrolichtbogenofen 1 ist optional eine Abgasnachverbrennungsanlage 70 nachgeschaltet, welche das aus dem Elektrolichtbogenofen 1 über einer Abgasleitung 71 kommende Abgas nachverbrennt und anschließend über einen Kamin 72 an die Umwelt abgibt. Eine derartige Abgasnachverbrennungsanlage 70 kann dabei über eine Steuerleitung 73 von der Regeleinrichtung 9 geregelt werden, die ein entsprechendes Regelsignal bevorzugt von der Recheneinheit 8 erhält.

Figur 4 zeigt in vereinfachter Darstellung eine der Elektroden 3b mit einem Lichtbogen 18 in einem Ofengefäß 1a eines Elektrolichtbogenofen 1. An der Wand 2 des Ofengefäßes 1a ist der Körperschallsensor 4b angeordnet, der mit der Signalleitung 5b verbunden ist, mit deren Hilfe Signale an die Recheneinheit 8 (siehe Figur 3) übermittelt werden.

In Figur 4 sind schematisch das Schmelzbad 16 und die Schaumschlacke 15 im Querschnitt des Ofengefäßes 1a dargestellt. Die Höhe HS der Schaumschlacke 15 kann in der Recheneinheit 8 mit Hilfe einer Übertragungsfunktion des Körperschalls im Elektrolichtbogenofen 1 bestimmt werden. Die Übertragungsfunktion charakterisiert den in Figur 4 schematisch angedeuteten Übertragungsweg 17 des Körperschalls von der Erregung bis zur Detektionsstelle. Die Erregung des Körperschalls erfolgt durch die Leistungseinkopplung an den Elektroden 3b im Lichtbogen 18. Der Körperschall, d.h. die durch die Erregung verursachten Schwingungen, wird durch das Schmelzbad 16 und/oder durch die das Schmelzbad 16 zumindest teilweise abdeckende Schaumschlacke 15 an die Wand 2 des Ofengefäßes 1a übertragen. Eine Übertragung von Körperschall kann zusätzlich, zumindest teilweise auch durch noch nicht aufgeschmolzenes Beschickungsmaterial im Elektrolichtbogenofen 1 erfolgen.

Die Auswertung der Messwerte bzw. Signale in der Recheneinheit 8 kann mit Hilfe von Erfahrungswerten aus dem Betrieb des Elektrolichtbogenofens 1 kontinuierlich optimiert werden. Die Signalerfassung, -auswertung und Schlackenhöhebestimmung erfolgt online im Betrieb, so dass die festgestellte Schaumschlackenhöhe im Elektrolichtbogenofen 1 zur automatischen Regelung des Kohlenmonoxid-Ausstoßes des Elektrolichtbogenofens 1 verwendbar ist.

Durch die schnelle und unmittelbare Erfassung der Höhe der Schaumschlacke im Ofengefäß 1a wird eine verbesserte Prozesskontrolle und -regelung ermöglicht, die zu jeder Zeit eine Vergleichmäßigung des Kohlenmonoxidgehalts im Abgas eines Elektrolichtbogenofens gewährleistet und gegebenenfalls eine optimale Nachverbrennung des Kohlenmonoxids sicherstellt.

Figur 5 zeigt eine Gegenüberstellung eines Kohlenmonoxidgehalts im Abgas CO_{abg} und einer Höhe der Schaumschlacke HS über die Zeit t in der Schaumschlackenphase eines Einschmelzprozesses in einem Elektrolichtbogenofen mit und ohne erfindungsgemäßer Regelung. Ohne eine Regelung der Höhe der zugehörige Schaumschlacke HS auf einen Maximalwert überschreitet der Kohlenmonoxidgehalt im Abgas CO_{abg} einen Wert COₘₐₓ. Bei einer Regelung der Höhe der Schaumschlacke HSᵣ derart, dass ein Maximalwert nicht überschritten wird, überschreitet der Kohlenmonoxidgehalt im Abgas CO_{abgr} den gewünschten Wert COₘₐₓ nicht mehr und der Kohlenmonoxidgehalt im Abgas wird vergleichmäßigt bzw. auf weitgehend gleichbleibendem Niveau gehalten.

Dabei zeigen die Figuren 1 bis 5 lediglich Beispiele, die bei veränderten Schmelzprogrammen, Elektrolichtbogenöfen usw. ganz unterschiedlich ausfallen können. Ein Fachmann ist in Kenntnis der Erfindung aber ohne weiteres in der Lage, gegebenenfalls nach Durchführung weniger Versuche, eine Regelung des Kohlenmonoxid-Ausstoßes auch für anders aufgebaute oder ausgestattete Elektrolichtbogenöfen unter Zuhilfenahme einer Bestimmung einer Höhe einer Schaumschlacke in mindestens drei Zonen des Ofengefäßes auf Basis einer Körperschallmessung durchzuführen.

## Patentansprüche

1. Verfahren zur Regelung eines Kohlenmonoxid-Ausstoßes eines Elektrolichtbogenofens (1), welcher ein Ofengefäß (1a), eine Anordnung zur Bestimmung einer Höhe einer Schaumschlacke (15) in mindestens drei Zonen des Ofengefäßes (1a) auf Basis einer Körperschallmessung, mindestens eine erste Einrichtung (50a, 50b, 50c) zur Regelung einer Sauerstoffzufuhr und mindestens eine zweite Einrichtung (60a, 60b, 60c) zur Regelung eines Kohlenstoffeintrags in das Ofengefäß (1a) aufweist, wobei die Höhe der Schaumschlacke (15) in jeder der mindestens drei Zonen bestimmt wird und dadurch erhaltene Messwerte einem Kohlenmonoxidgehalt im Abgas des Elektrolichtbogenofens (1) zugeordnet werden, wobei der Kohlenstoffeintrag und/oder die Sauerstoffzufuhr in mindestens einer der zumindest drei Zonen derart geregelt werden, dass die Höhe der Schaumschlacke (15) und damit der Kohlenmonoxidgehalt im Abgas unterhalb eines Maximalwerts gehalten werden.

2. Verfahren nach Anspruch 1,
wobei die Höhe der Schaumschlacke (15) weiterhin oberhalb eines Minimalwerts gehalten wird.

3. Verfahren nach Anspruch 1 oder Anspruch 2,
wobei jeder der zumindest drei Zonen mindestens eine erste Einrichtung (50a, 50b, 50c) zugeordnet wird und die Sauerstoffzufuhr für jede der zumindest drei Zonen separat geregelt wird.

4. Verfahren nach einem der Ansprüche 1 bis 3,
wobei jeder der zumindest drei Zonen mindestens eine zweite Einrichtung (60a, 60b, 60c) zugeordnet wird und der Kohlenstoffeintrag für jede der zumindest drei Zonen separat geregelt wird.

5. Verfahren nach einem der Ansprüche 1 bis 4,
wobei mittels Extrapolation eine Vorhersage eines Verlaufs der Höhe der Schaumschlacke (15) in jeder der zumindest drei Zonen und/oder gemittelt über die zumindest drei Zonen erfolgt.

6. Verfahren nach einem der Ansprüche 1 bis 5,
wobei eine Vorhersage eines Verlaufs der Höhe der Schaumschlacke (15) in jeder der zumindest drei Zonen und/oder gemittelt über die zumindest drei Zonen und eine Korrelation von Messwerten zur Höhe der Schaumschlacke (15) mit Kohlenmonoxidgehalten anhand gemessener Kohlenmonoxidgehalte im Abgas durchgeführt wird.

7. Verfahren nach einem der Ansprüche 1 bis 6,
wobei eine Vorhersage eines Verlaufs der Höhe der Schaumschlacke (15) in jeder der zumindest drei Zonen und/oder gemittelt über die zumindest drei Zonen und eine Korrelation von Messwerten zur Höhe der Schaumschlacke (15) mit Kohlenmonoxidgehalten im Abgas anhand eines Reaktionsmodells durchgeführt wird, das auf mindestens einer Recheneinheit (8) hinterlegt wird.

8. Verfahren nach einem der Ansprüche 1 bis 7,
wobei mindestens ein Fuzzy-Regler zur Regelung der mindestens einen ersten Einrichtung (50a, 50b, 50c) und/oder der mindestens einen zweiten Einrichtung (60a, 60b, 60c) eingesetzt wird.

9. Verfahren nach einem der Ansprüche 1 bis 8,
wobei ein aktueller Kohlenmonoxidgehalt im Abgas gemessen und mit einem Sollkohlenmonoxidgehalt verglichen wird, und eine Erreichung des Sollkohlenmonoxidgehalts angestrebt wird, indem der Maximalwert dynamisch verändert wird.

10. Verfahren nach einem der Ansprüche 1 bis 9,
wobei der Maximalwert mit einem zulässigen Grenzwert für Kohlenmonoxid korreliert wird.

11. Verfahren nach einem der Ansprüche 1 bis 10, wobei nach Zuordnung der Höhe der Schaumschlacke (15) in jeder der mindestens drei Zonen zu einem Kohlenmonoxidgehalt im Abgas des Elektrolichtbogenofens (1) eine dem Elektrolichtbogenofen (1) nachgeschaltete Abgasnachverbrennungsanlage (70) anhand des zugeordneten Kohlenmonoxidgehalts geregelt wird.

12. Verfahren nach einem der Ansprüche 1 bis 11, wobei die Messwerte zur Höhe der Schaumschlacke (15) mittels mindestens einer Recheneinheit (8) erfasst werden, wobei die Messwerte weiterhin mittels der mindestens einen Recheneinheit (8) einem Kohlenmonoxidgehalt im Abgas des Elektrolichtbogenofens (1) zugeordnet werden, wobei die Messwerte mittels der mindestens einen Recheneinheit (8) mit dem Maximalwert für die Höhe der Schaumschlacke (15) verglichen werden, und wobei bei Überschreitung des Maximalwerts von der mindestens einen Recheneinheit (8) mindestens ein Regelsignal für zumindest die mindestens eine erste Einrichtung (50a, 50b, 50c) und/oder die mindestens eine zweite Einrichtung (60a, 60b, 60c) ausgegeben wird.

13. Verfahren nach Anspruch 12, wobei die Messwerte mittels der mindestens einen Recheneinheit (8) weiterhin mit dem Minimalwert für die Höhe der Schaumschlacke (15) verglichen werden und bei einer Unterschreitung des Minimalwerts von der mindestens einen Recheneinheit (8) mindestens ein Regelsignal für die mindestens eine erste Einrichtung (50a, 50b, 50c) und/oder die mindestens eine zweite Einrichtung (60a, 60b, 60c) ausgegeben wird.

## Claims

1. Process for controlling a carbon monoxide emission of an electric arc furnace (1), which comprises a furnace vessel (1a), an arrangement for determining a height of a foamed slag (15) in at least three zones of the furnace vessel (1a) on the basis of a structure-borne noise measurement, at least one first device (50a, 50b, 50c) for controlling a supply of oxygen, and at least one second device (60a, 60b, 60c) for controlling an introduction of carbon into the furnace vessel (1a), wherein the height of the foamed slag (15) is determined in each of the at least three zones and measured values obtained thereby are associated with a carbon monoxide content in the off-gas of the electric arc furnace (1), wherein the introduction of carbon and/or the supply of oxygen in at least one of the at least three zones is controlled in such a manner that the height of the foamed slag (15) and thus the carbon monoxide content in the off-gas are maintained below a maximum value.

2. Process according to Claim 1, wherein the height of the foamed slag (15) is furthermore maintained above a minimum value.

3. Process according to Claim 1 or Claim 2, wherein at least one first device (50a, 50b, 50c) is assigned to each of the at least three zones and the supply of oxygen is controlled separately for each of the at least three zones.

4. Process according to one of Claims 1 to 3, wherein at least one second device (60a, 60b, 60c) is assigned to each of the at least three zones and the introduction of carbon is controlled separately for each of the at least three zones.

5. Process according to one of Claims 1 to 4, wherein extrapolation is used to predict a progression of the height of the foamed slag (15) in each of the at least three zones and/or averaged over the at least three zones.

6. Process according to one of Claims 1 to 5, wherein carbon monoxide contents measured in the off-gas are used to predict a progression of the height of the foamed slag (15) in each of the at least three zones and/or averaged over the at least three zones and to correlate measured values relating to the height of the foamed slag (15) with carbon monoxide contents.

7. Process according to one of Claims 1 to 6, wherein a reaction model stored on at least one computation unit (8) is used to predict a progression of the height of the foamed slag (15) in each of the at least three zones and/or averaged over the at least three zones and to correlate measured values relating to the height of the foamed slag (15) with carbon monoxide contents in the off-gas.

8. Process according to one of Claims 1 to 7, wherein at least one fuzzy controller is used to control the at least one first device (50a, 50b, 50c) and/or the at least one second device (60a, 60b, 60c).

9. Process according to one of Claims 1 to 8, wherein a current carbon monoxide content in the off-gas is measured and compared with a nominal carbon monoxide content, and an attainment of the nominal carbon monoxide content is targeted by dynamically changing the maximum value.

10. Process according to one of Claims 1 to 9, wherein the maximum value is correlated with a permissible limit value for carbon monoxide.

11. Process according to one of Claims 1 to 10, wherein, after the height of the foamed slag (15) in each of the at least three zones has been associated with a carbon monoxide content in the off-gas of the electric arc furnace (1), an off-gas post-combustion plant (70) situated downstream of the electric arc furnace (1) is controlled on the basis of the associated carbon monoxide content.

12. Process according to one of Claims 1 to 11, wherein the measured values relating to the height of the foamed slag (15) are captured by means of at least one computation unit (8), wherein the measured values are furthermore associated with a carbon monoxide content in the off-gas of the electric arc furnace (1) by means of the at least one computation unit (8), wherein the measured values are compared with the maximum value for the height of the foamed slag (15) by means of the at least one computation unit (8), and wherein, if the maximum value is exceeded, at least one control signal for at least the at least one first device (50a, 50b, 50c) and/or the at least one second device (60a, 60b, 60c) is emitted by the at least one computation unit (8).

13. Process according to Claim 12, wherein the measured values are furthermore compared with the minimum value for the height of the foamed slag (15) by means of the at least one computation unit (8), and, if the minimum value is undershot, at least one control signal for the at least one first device (50a, 50b, 50c) and/or the at least one second device (60a, 60b, 60c) is emitted by the at least one computation unit (8).

## Revendications

1. Procédé destiné à la régulation d'un rejet de monoxyde de carbone d'un four à arc électrique (1), lequel présente une carcasse de four (1a), un agencement destiné à la détermination d'une épaisseur d'un laitier expansé (15) dans au moins trois zones de la carcasse de four (1a) sur la base d'une mesure de bruit de structure, au moins un premier dispositif (50a, 50b, 50c) destiné à la régulation d'une alimentation en oxygène et au moins un deuxième dispositif (60a, 60b, 60c) destiné à la régulation d'un apport en carbone dans la carcasse de four (1a), dans lequel l'épaisseur du laitier expansé (15) est déterminée dans chacune des au moins trois zones et les valeurs de mesure ainsi obtenues sont associées à une teneur en monoxyde de carbone dans le gaz d'échappement du four à arc électrique (1), dans lequel l'apport en carbone et/ou l'alimentation en oxygène sont régulés dans au moins l'une des trois zones de telle sorte que l'épaisseur du laitier expansé (15) et ce faisant la teneur en monoxyde de carbone dans le gaz d'échappement sont maintenues en dessous d'une valeur maximale.

2. Procédé selon la revendication 1, dans lequel l'épaisseur du laitier expansé (15) est en outre maintenue au-dessus d'une valeur minimale.

3. Procédé selon la revendication 1 ou la revendication 2, dans lequel au moins un premier dispositif (50a, 50b, 50c) est associé à chacune des au moins trois zones et l'alimentation en oxygène est régulée séparément pour chacune des au moins trois zones.

4. Procédé selon l'une des revendications 1 à 3, dans lequel au moins un deuxième dispositif (60a, 60b, 60c) est associé à chacune des au moins trois zones et l'apport en carbone est régulé séparément pour chacune des au moins trois zones.

5. Procédé selon l'une des revendications 1 à 4, dans lequel au moyen d'une extrapolation une prévision d'une évolution de l'épaisseur du laitier expansé (15) dans chacune des au moins trois zones et/ou obtenue par l'intermédiaire des au moins trois zones s'opère.

6. Procédé selon l'une des revendications 1 à 5, dans lequel une prévision d'une évolution de l'épaisseur du laitier expansé (15) dans chacune des au moins trois zones et/ou obtenue par l'intermédiaire des au moins trois zones et une corrélation des valeurs de mesure par rapport à l'épaisseur du laitier expansé (15) avec des teneurs en monoxyde de carbone sont réalisées à l'aide des teneurs en monoxyde de carbone mesurées dans le gaz d'échappement.

7. Procédé selon l'une des revendications 1 à 6, dans lequel une prévision d'une évolution de l'épaisseur du laitier expansé (15) dans chacune des au moins trois zones et/ou obtenue par l'intermédiaire des au moins trois zones et une corrélation des valeurs de mesure par rapport à l'épaisseur du laitier expansé (15) avec des teneurs en monoxyde de carbone sont réalisées à l'aide d'un modèle de réaction qui est mis en mémoire dans au moins une unité de calcul (8).

8. Procédé selon l'une des revendications 1 à 7, dans lequel au moins un régulateur de flou destiné à la régulation de l'au moins un premier dispositif (50a, 50b, 50c) et/ou de l'au moins un deuxième dispositif (60a, 60b, 60c) est utilisé.

9. Procédé selon l'une des revendications 1 à 8, dans lequel une teneur en monoxyde de carbone du moment dans le gaz d'échappement est mesurée et comparée à une teneur en monoxyde de carbone théorique, et l'obtention de la teneur en monoxyde de carbone théorique est recherchée en procédant à une modification dynamique de la valeur maximale.

10. Procédé selon l'une des revendications 1 à 9, dans lequel la valeur maximale est corrélée avec une valeur limite admissible pour le monoxyde de carbone.

11. Procédé selon l'une des revendications 1 à 10, dans lequel après l'association de l'épaisseur du laitier expansé (15) dans chacune des au moins trois zones à une teneur en monoxyde de carbone dans le gaz d'échappement du four à arc électrique (1) une installation de postcombustion de gaz d'échappement (70) montée en aval du four à arc électrique (1) est régulée à l'aide de la teneur en monoxyde de carbone associée.

12. Procédé selon l'une des revendications 1 à 11, dans lequel les valeurs de mesure pour l'épaisseur du laitier expansé (15) sont acquises au moyen d'au moins une unité de calcul (8), dans lequel les valeurs de mesure sont en outre associées au moyen de l'au moins une unité de calcul (8) à une teneur en monoxyde de carbone dans le gaz d'échappement du four à arc électrique (1), dans lequel les valeurs de mesure sont comparées au moyen de l'au moins une unité de calcul (8) à la valeur maximale pour l'épaisseur du laitier expansé (15), et dans lequel lors du dépassement par le haut de la valeur maximale au moins un signal de régulation est émis par l'au moins une unité de calcul (8) pour au moins l'au moins un premier dispositif (50a, 50b, 50c) et/ou l'au moins un deuxième dispositif (60a, 60b, 60c).

13. Procédé selon la revendication 12, dans lequel les valeurs de mesure sont en outre comparées au moyen de l'au moins une unité de calcul (8) à la valeur minimale pour l'épaisseur du laitier expansé (15) et lors d'un dépassement par le bas de la valeur minimale au moins un signal de régulation est émis par l'au moins une unité de calcul (8) pour l'au moins un premier dispositif (50a, 50b, 50c) et/ou l'au moins un deuxième dispositif (60a, 60b, 60c).
